# EUROPEAN PATENT APPLICATION

(11) **EP 1 574 313 A1**
(43) Date of publication of application: **14.09.2005**
(21) Application number: 04388016.0
(22) Date of filing: 09.03.2004
(51) Int. Cl.: B29C 45/17, B65D 1/46

(54) **A method for producing a plastic container by gas assisted injection molding, injection mold therefor and plastic container so produced**

(71) Applicant: Superfos a/s, 4390 Vipperoed (DK)
(72) Inventor: Pudselykke,Lars, 4300 Holbaek (DK); Stensbol Michael, 3500 Vaerlose (DK)
(74) Representative: Sundien, Thomas

(57) **Abstract**

The invention concerns a method of making a plastics container (50) having a bottom and a peripheral wall (55) defining an axial extension (C) of the container and having an upper edge (56) opposite said bottom, said wall (55) and/or said bottom including a peripheral area (57) of increased thickness with an internal cavity (45, 60), wherein a mold (M) for injection molding having a mold cavity shaped in accordance with the contour of said container (50) is provided, wherein a plastics material is injected into a first part (35) of said mold cavity, and wherein a fluid is injected into said mold cavity so as to displace a part (40) of said plastics material already injected into a second part (32, 45) of said mold cavity.

## Description

The present invention concerns a method of making an improved plastics container of the general type that has a bottom, a peripheral wall defining an axial extension of the container and an upper edge opposite said bottom, a peripheral skirt being arranged near the upper edge to reinforce the container. The making of the skirt in a simple and efficient manner has so far posed problems, the skirt normally being formed in the general manner disclosed in i.a. European patent application no. 1 245 371.

According to the invention, a container as mentioned having a thickened peripheral area at the upper edge may be made in a simple and cost efficient manner by providing a mold for injection molding with a mold cavity shaped in accordance with the contour of the container, by then injecting a plastics material into a first part of the mold cavity, and by subsequently injecting a fluid into the mold cavity so as to displace a part of the injected plastics material into a second part of the mold cavity. By the term "fluid" as used herein is meant a gas or a liquid. When supplying a liquid, such as water, the temperature of the mold will typically lead to the liquid evaporating such that vapour enters the mold cavity. Preferably, the fluid is injected into the first part already filled with said plastics material.

The invention also relates to an injection mold for making the aforementioned plastics container, wherein the mold has a plastics material injection port, and a male mold part and a female mold part defining together a mold cavity shaped in accordance with the contour of the container, the mold additionally having at least one fluid injection means communicating with a part of the mold cavity. Preferably, the fluid injection means includes a conduit formed in the male mold part and/or said female mold part, and the conduit may connect to tubing extending into the mold cavity.

A preferred embodiment of the invention will now be described with reference to the drawing where
Fig. 1 shows a cross-sectional view of an example of a plastics container made using the principles of the invention,
Fig. 2 shows a cross-sectional view through an injection mold suitable for making the plastics container of fig. 1,
Fig. 3 shows the mold of fig. 2 after injection of a plastics material, and
Fig. 4 shows the mold of fig. 2 after completion of the plastics container.

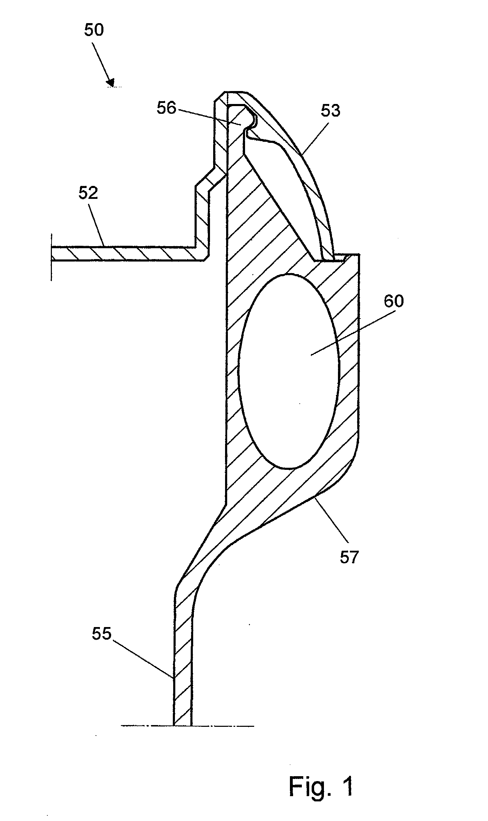

Fig. 1 shows the rim area of a plastic container 50 made in accordance with the principles of the present invention and having a plastics lid 52 applied thereon. The plastics container 50 may be used for transporting and storing a plethora of products, including paint and eatable products.

The container 50 has a bottom (not shown) integrally connected to a peripheral wall 55 which opposite the bottom has a free edge 56 which may have a peripheral projection allowing for a snap-engagement with a peripheral skirt 53 on the lid 52.

The wall 55 of the plastics container 50 has thickened peripheral area or skirt 57 near the upper edge 56 which inter alia serves the purpose of providing a strengthening of the container 50. The skirt 57 has an internal cavity 60 preferably extending continuously around the periphery of the container 50. The absence of any plastics material within the skirt 57 provides for a reduction of the weight of the container 50. As an example, the skirt 57 may extend radially outwards from the wall 55 by 10-20 mm, the cavity having a width of 10-15 mm.

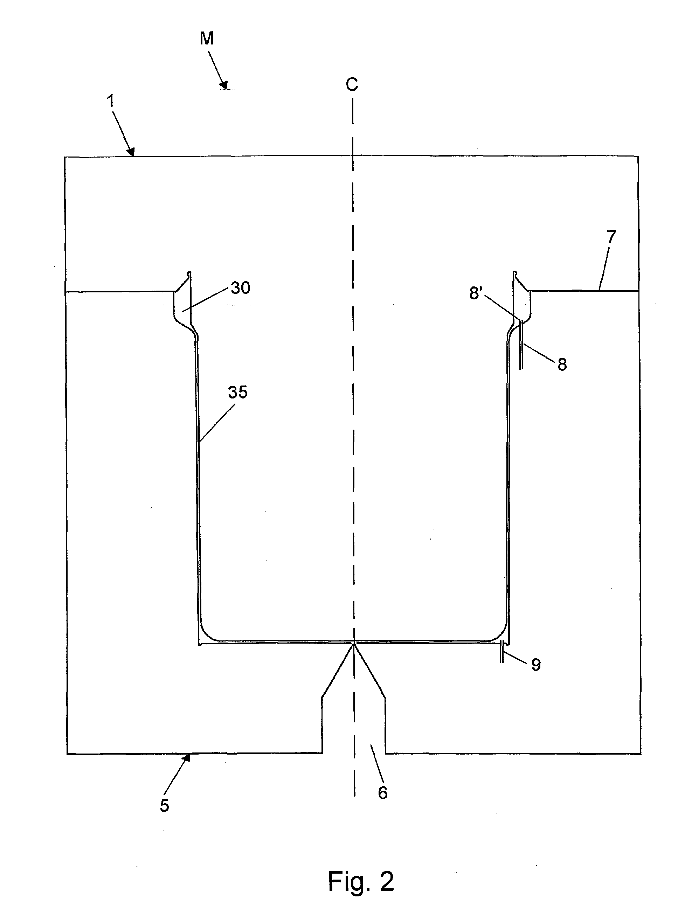

The container 50 of fig. 1 may be made using the mold M shown in fig. 2. The mold M includes a plastics material injection port 6 formed in a female mold part 5, and a male mold part 1 defines together with the female mold part 5 a mold cavity shaped in accordance with the contour of the product to be made, in this example in accordance with the contour of the container 50 of fig. 1. In the example, the male mold part 1 and the female mold part 5 are arranged so as to be displaceable in relation to one another along an axis C which is coincident with a central axis of the container 50 to be molded, for ejection of the completed plastics product.

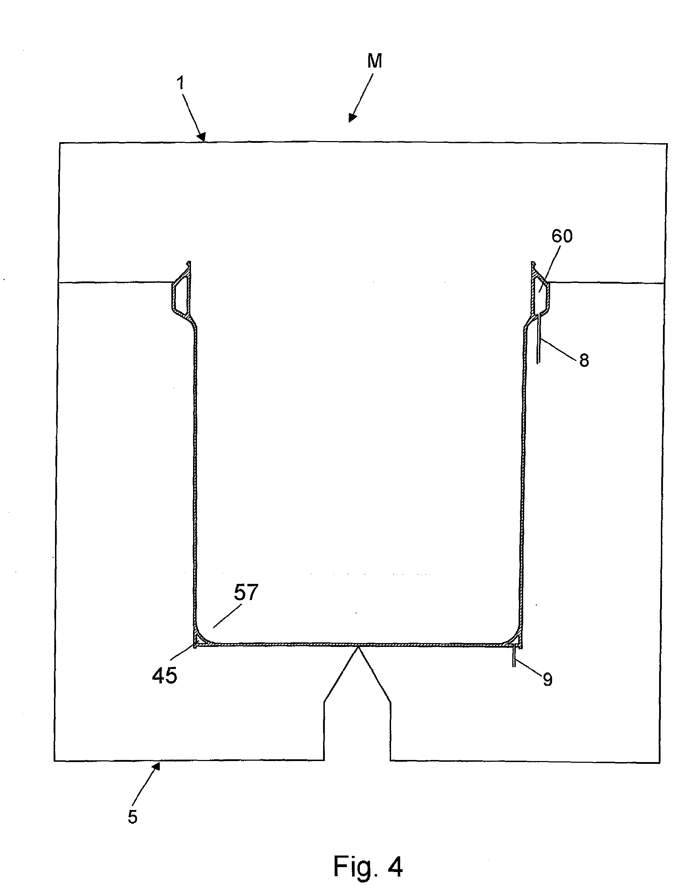

The mold M also has fluid injection means communicating with a part of the mold cavity and including a conduit schematically shown by reference numeral 8 arranged in the female mold part 5 and having a tubing part 8' extending slightly into a part 30 of the mold cavity used for forming the container skirt 57. The mold M may include additional fluid injection means communicating with different areas of the mold cavity, such as with peripherally differently located areas at the level of the part 30 of the mold cavity used for forming the container skirt 57 and/or at locations corresponding to areas where the bottom of the container 50 is formed, if a container cavity 45 (see fig. 4) is required near the bottom of the container 50. It will be understood that the fluid injection means communicate with a fluid supply arranged externally of the mold M and also that one or several of the aforementioned conduits may alternatively or additionally be arranged in the male part, as required.

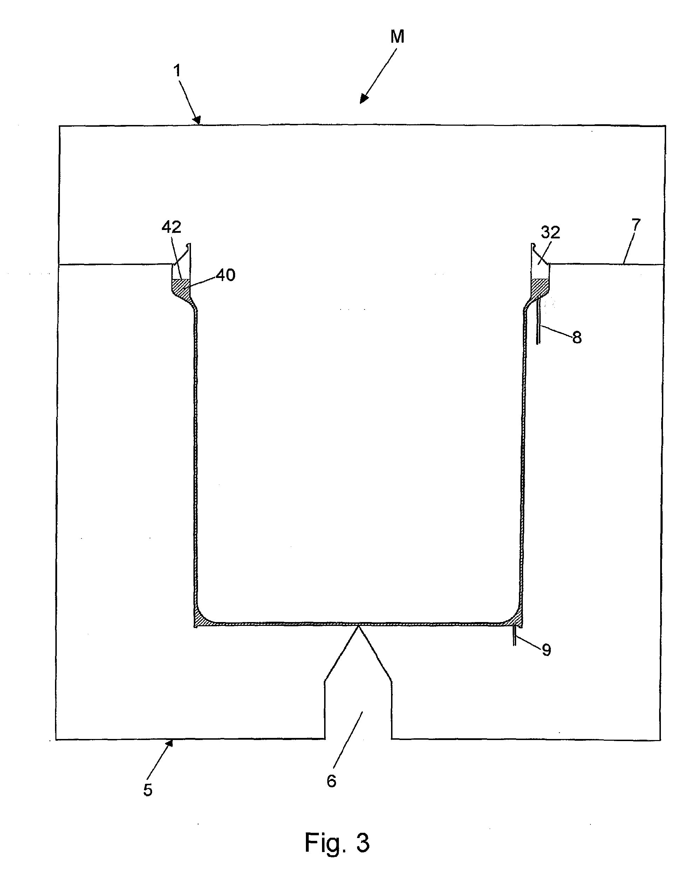

In operation, a plastics material is first injected through port 6 into a first volume or part of the mold cavity, the injection process being stopped when the plastics material has reached the level 42 within the mold cavity shown in fig. 3 where the injected plastics material is indicated by the shaded area. The part of the mold cavity now filled with plastics material will be referred to as a first part of the mold cavity while the remaining part of the mold cavity will be referred to as the second part 32 of the mold cavity.

At this time, i.e. when the plastics material is still held above or well above the melting point, a fluid, such as air or any other suitable gas, is injected into the mold cavity through conduit 8. Preferably the tubing 8' extends into the mold cavity as far as to a level below or well below the resulting level 42 of the plastics material after completion of the injection stage. In a process similar to blow molding, the injected fluid now displaces the plastics material 40 towards those surfaces of the male and female mold parts 1, 5 that delimit the aforementioned second part 32 of the mold cavity, and by appropriate cooling of the mold M using cooling means formed within the mold parts 1, 5, the plastics material 40 will then harden and define the cavity 60 as shown in fig. 4. Depending on the arrangement of the tubing 8' the cavity 60 may extend continuously or discontinuously around the periphery of the container 50.

It is noted that the mold may additionally include means for forming openings in the wall 55 leading in to the cavity 60 for the purpose of mounting a handle on the container 50, the handle in this case having at each end a pin insertable into the openings and expanding after the insertion to firmly anchor the handle. It is also noted that the mold M may preferably be provided with venting orifices for venting the fluid injected into the mold M.

Although the invention has been discussed above in relation to the making of a plastics container, use of the combined injection molding and blow molding technique described above may also be contemplated when making other type plastic items where a major or minor part thereof is suitable for being made by conventional injection molding only while other parts thereof are to be formed with internal cavities. In this sense, the invention in its broadest sense is to provide first a mold for injection molding and having a mold cavity shaped in accordance with the contour of a plastics item to be made, then injecting a plastics material into a first part of the mold cavity, and then injecting a fluid into the mold cavity so as to displace a part of the plastics material already injected into a second part of the mold cavity so as to form in that second part an internal cavity within the plastics item. While in relation to the making of a plastics container the claims define the peripheral area as having an increased thickness the invention may also draw advantage when making containers having areas that do not appear to have any, or any substantial, increased thickness but that do require an internal cavity. Accordingly, the invention is not limited to the container specifically claimed herein.

## Claims

1. A method of making a plastics container (50) having a bottom and a peripheral wall (55) defining an axial extension (C) of the container and having an upper edge (56) opposite said bottom, said wall (55) and/or said bottom including a peripheral area (57) of increased thickness with an internal cavity (45, 60), **characterised in**
providing a mold (M) for injection molding, the mold (M) having a mold cavity shaped in accordance with the contour of said container (50),
injecting a plastics material into a first part (35) of said mold cavity, and
injecting a fluid into said mold cavity so as to displace a part (40) of said injected plastics material into a second part (32, 45) of said mold cavity.

2. A method according to the preceding claim wherein said fluid is injected into said first part (35) already filled with said plastics material.

3. A method according to any of the preceding claims, said wall (55) having near said upper edge (56) said peripheral area (57) of increased thickness, said second part (32) of said mold cavity defining in part said peripheral area (57).

4. A method according to any of the preceding claims, said container (50) having near said bottom said peripheral area of increased thickness, said second part of said mold cavity defining in part said peripheral area (57) near said bottom.

5. A method according to any of the preceding claims, said fluid being a gas.

6. An injection mold (M) for making a plastics container (50) having a bottom and a peripheral wall (55) defining an axial extension (C) of the container and having an upper edge (56) opposite said bottom, said wall (55) and/or said bottom including a peripheral area (57) of increased thickness with an internal cavity (45, 60), said mold (M) including a plastics material injection port (6), and a male mold part (1) and a female mold part (5) defining together a mold cavity shaped in accordance with the contour of said container (50), **characterised in** at least one fluid injection means (8, 9) communicating with a part (30) of said mold cavity.

7. An injection mold (M) according to the preceding claim, said male mold part (1) and said female mold part (5) being displaceable in relation to one another along an axis (C).

8. An injection mold (M) according to claim 6 or 7, said fluid injection means including a conduit (8) formed in said male mold part (1) and/or said female mold part (5).

9. An injection mold (M) according to any of the preceding claims 6-8, said fluid injection means including a tubing (8') extending into said part (30) of said mold cavity.

10. A method of using the injection mold according to any of claims 6-9, **characterised in**
first injecting a plastics material into a first part (35) of said mold cavity,
then injecting a fluid into said mold cavity so as to displace a part (40) of said plastics material already injected into a second part (32) of said mold cavity.

11. A plastics container (50) having a bottom and a peripheral wall (55) defining an axial extension (C) of the container and having an upper edge (56) opposite said bottom, said wall (55) and/or said bottom including a peripheral area (57) of increased thickness with an internal cavity (45, 60).

12. A plastics container according to claim 11, made in accordance with the method of any of the preceding claims.

13. A plastics container according to claim 11, made using the injection mold of any of claims 6-9.
